# EUROPEAN PATENT APPLICATION

(11) **EP 4 261 266 A1**
(43) Date of publication of application: **18.10.2023**
(21) Application number: 20964768.4
(22) Date of filing: 11.12.2020
(51) Int. Cl.: C09K 11/66, C09K 11/61, B82Y 20/00

(54) **STABLE AND EFFICIENT LIGHT-EMITTING ALL-INORGANIC CALCIUM FLUORIDE PEROVSKITE QUANTUM DOT, PREPARATION METHOD THEREFOR, AND APPLICATION THEREOF**

(71) Applicant: Fujian Institute Of Research On The Structure Of Matter, Chinese Academy Of Sciences, Fuzhou, Fujian 350002 (CN); Mindu Innovation Lab, Fuzhou, Fujian 350108 (CN)
(72) Inventor: HONG, Maochun, Fuzhou, Fujian 350002 (CN); WEI, Youchao, Fuzhou, Fujian 350002 (CN); WANG, Zhaoyu, Fuzhou, Fujian 350002 (CN); LIU, Yongsheng, Fuzhou, Fujian 350002 (CN)
(74) Representative: Gille Hrabal Partnerschaftsgesellschaft mbB Patentanwälte
(86) International application number: PCT/CN2020/135881
(87) International publication number: WO 2022/120832

(57) **Abstract**

A stable and efficient light-emitting all-inorganic calcium fluoride perovskite quantum dot, a preparation method therefor, and an application thereof. The all-inorganic calcium fluoride perovskite quantum dot is prepared by a simple high-temperature hot injection method, and the prepared all-inorganic calcium fluoride perovskite quantum dot has good dispersibility, uniformity and repeatability. Due to the protection of fluorine ions on a CsPbX₃ quantum dot, the all-inorganic calcium fluoride perovskite quantum dot has stronger fluorescence emission and better stability than a pure CsPbX₃ quantum dot; and the all-inorganic calcium fluoride perovskite quantum dot has a fluorescence quantum yield of about 100% and a fluorescence lifetime that single-exponentially decays, and can still emit dazzling fluorescence after one year. The all-inorganic calcium fluoride perovskite quantum dot can be used as a stable and efficient nano-luminescent material, and has potential application prospects in the fields of photoelectric and photovoltaic devices and the like.

## Description

### TECHNICAL FIELD

The present disclosure belongs to the technical field of nano-photoelectric materials, and particularly relates to a type of stable and efficient light-emitting all-inorganic fluoride perovskite quantum dot, and a preparation method and applications thereof.

### BACKGROUND

With the increasing consumption of fossil energy by human beings, it is urgent to fully develop and utilize renewable energy. The European Union Research Center predicts that renewable energy will account for 86% of the total energy demand by 2100. Thereinto, solar energy alone accounts for 60% or more of the total energy demand, so the development and utilization of solar energy are concerned with the future energy supply and long-term interests of human beings. Solar cells can utilize the photovoltaic effect to convert solar radiation into electrical energy. The organic-inorganic hybrid perovskite has been successfully utilized in photovoltaic devices, and researches show that the all-inorganic trihalide perovskite possesses significantly superior stability compared to the organic-inorganic hybrid perovskite, and thus has great research significance and good application prospects. The all-inorganic perovskite quantum dots have the advantages of relatively high photoluminescence quantum yield (PLQY), adjustable PL wavelength covering the whole visible spectrum, narrow emission line width, excellent carrier transport ability, and the like, which make them promising for applications in the fields of light-emitting display, photoelectric conversion and detection, and the like, such as solar cells, lasers, and light-emitting diodes.

However, at present, the perovskite quantum dots suffer from poor stability which make them sensitive to humidity, illumination, temperature, and the like, severely limiting their industrialization. Meanwhile, defects in the interior and on the surface of the perovskite quantum dots can be very harmful to the PLQY, and cause multi exponential PL lifetime decay. Therefore, it is necessary to prepare a type of stable and efficient all-inorganic perovskite quantum dot to address the above problems.

### SUMMARY

In order to eliminate the disadvantages in the prior art, the present disclosure aims to provide a type of stable and efficient light-emitting all-inorganic fluorinated perovskite quantum dot, and a preparation method therefor and applications thereof.

The purpose of the present disclosure is realized by the following technical solutions: A type of all-inorganic fluorinated perovskite quantum dot, wherein the perovskite quantum dot is a CsPbX₃ quantum dot, wherein X is a halogen element and is selected from one, two, or three of Cl, Br, and I; the all-inorganic fluorinated perovskite quantum dot is doped with the fluorine element and is abbreviated as CsPbX₃:F. According to embodiments of the present disclosure, the halogen element and the fluorine element are in ionic states in the all-inorganic fluorinated perovskite quantum dot.

According to embodiments of the present disclosure, the all-inorganic fluorinated perovskite quantum dot is CsPbCl₃:F, CsPbBr₃:F, CsPbI₃:F, CsPbClₙBr₃₋ₙ(0<n<3):F, or CsPbBrₙI₃₋ₙ(0<n<3):F; preferably, the all-inorganic fluorinated perovskite quantum dot is CsPbCl₃:F, CsPbBr₃:F, or CsPbI₃:F; more preferably, the all-inorganic fluorinated perovskite quantum dot is CsPbI₃:F.

According to embodiments of the present disclosure, the all-inorganic fluorinated perovskite quantum dot is of a cubic phase, tetragonal phase, or orthorhombic phase structure, preferably of a cubic phase or tetragonal phase structure, more preferably of a cubic phase structure.

According to embodiments of the present disclosure, the all-inorganic fluorinated perovskite quantum dot has a particle size of 1-100 nm, preferably 5-40 nm, more preferably 8-16 nm.

According to embodiments of the present disclosure, in the all-inorganic fluorinated perovskite quantum dot, X and F are in a molar ratio of (0-1):(0-1), not including 0, preferably (0.9-1):(0.2-0.6), illustratively, 0.9:0.2, 0.9:0.3, 0.9:0.4, 0.9:0.5, 0.9:0.6, 1:0.2, 1:0.3, 1:0.4, 1:0.5, 1:0.6, or 0.95:0.3.

According to embodiments of the present disclosure, in the all-inorganic fluorinated perovskite quantum dot, F ions are incorporated into the lattice of CsPbX₃ quantum dot by binding to Cs ions to form CsF•3/2HF (or CsF) compounds. The all-inorganic fluorinated perovskite quantum dot is almost free of intrinsic defects on the surface and in the interior.

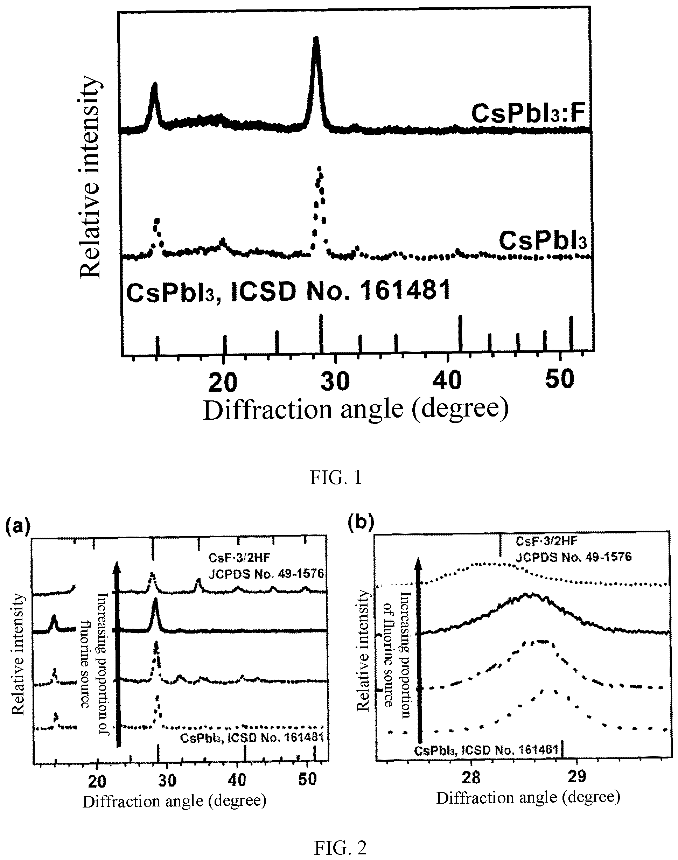

According to embodiments of the present disclosure, the all-inorganic fluorinated perovskite quantum dot CsPbI₃:F has an X-ray powder diffraction (XRD) pattern substantially as shown in FIG. 1.

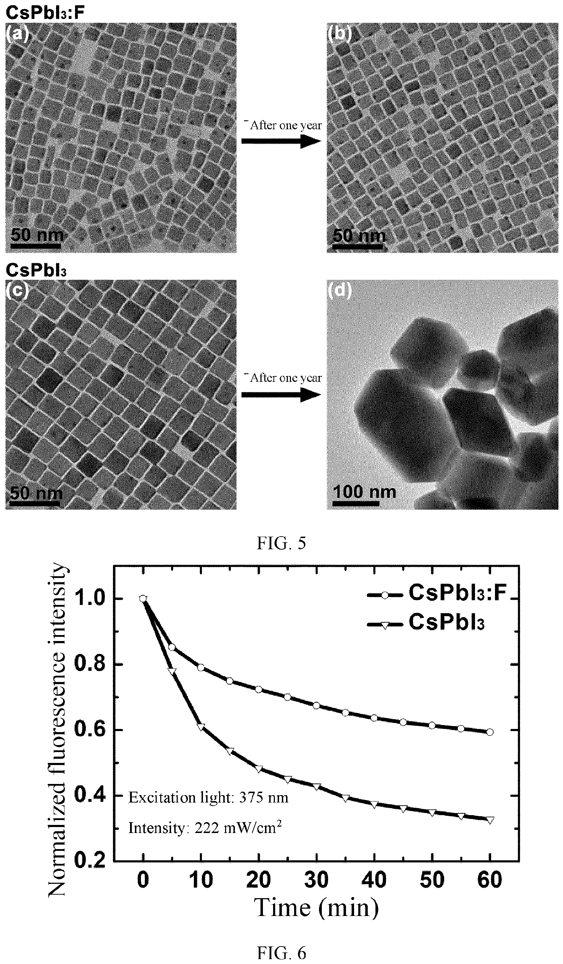

According to embodiments of the present disclosure, the all-inorganic fluorinated perovskite quantum dot CsPbI₃:F has a morphology substantially as shown in FIG. 5. According to embodiments of the present disclosure, the all-inorganic fluorinated perovskite quantum dot may have a PLQY up to about 100%. Further, after being stored for one year away from the light, the all-inorganic fluorinated perovskite quantum dot still has a PLQY over 70%.

According to embodiments of the present disclosure, the all-inorganic fluorinated perovskite quantum dot has excellent thermal-stability, for example, it can be tolerant to a temperature of 80-120 °C in air.

The present disclosure further provides a preparation method for the all-inorganic fluorinated perovskite quantum dot, which comprises the following step: obtaining the all-inorganic fluorinated perovskite quantum dot by a hot-injection method using a cesium source, a lead source, a long-alkyl-chain organic acid, a long-alkyl-chain organic amine, trioctylphosphine, octadecene, a halogen source, and a fluorine source as starting materials.

Preferably, the preparation method for the all-inorganic fluorinated perovskite quantum dot comprises the following steps:
(1) mixing the cesium source, the lead source, the long-alkyl-chain organic acid, the long-alkyl-chain organic amine, trioctylphosphine, and octadecene to obtain a mixed solution 1;
(2) mixing the halogen source and the fluorine source to obtain a mixed solution 2; and
(3) rapidly adding the mixed solution 2 into the mixed solution 1 to react, and rapidly cooling the mixture after the reaction is completed to obtain the all-inorganic fluorinated perovskite quantum dot.

According to embodiments of the present disclosure, the cesium source, the lead source, and the long-alkyl-chain organic acid are in a molar-to-volume ratio of (0.08-0.12) mmol:(0.18-0.22) mmol:(0.5-1.5) mL, preferably 0.1 mmol:0.2 mmol:1 mL. According to embodiments of the present disclosure, the long-alkyl-chain organic acid, the long-alkyl-chain organic amine, the trioctylphosphine, and the octadecene are in a volume ratio of (0.5-1.5):(0.5-1.5):(0.5-1.5):(5-15), preferably (0.8-1.2):(0.8-1.2):(0.8-1.2):(8-12), illustratively, 1:1:1:10.

According to embodiments of the present disclosure, the cesium source is selected from one, two, or more of cesium carbonate, cesium acetate, cesium oleate, and the like, and is preferably cesium carbonate.

According to embodiments of the present disclosure, the lead source is selected from one, two, or more of lead stearate, lead oleate, lead oxide, lead acetate, and lead nitrate, and is preferably lead acetate.

According to embodiments of the present disclosure, the long-alkyl-chain organic acid is selected from one, two, or more of octanoic acid, dodecanoic acid, and oleic acid, and is preferably oleic acid.

According to embodiments of the present disclosure, the long-alkyl-chain organic amine is selected from one, two, or more of butylamine, n-octylamine, dodecylamine, octadecylamine, and oleylamine, preferably oleylamine.

According to embodiments of the present disclosure, in the step (1), the mixing is performed under conditions of an inert atmosphere and stirring.

According to embodiments of the present disclosure, in the step (1), the mixing is performed at a temperature of 80-200 °C, e.g., 100-150 °C, illustratively, 110 °C, 120 °C, 130 °C, or 140 °C. As another example, the mixing is performed for 0.5-1.5 h, e.g., 0.8-1.2 h, illustratively, 1 h.

According to an exemplary method of the present disclosure, the step (1) comprises the following steps:
adding cesium carbonate and lead acetate into a mixed solvent of oleic acid, oleylamine, trioctylphosphine, and octadecene at room temperature to obtain a mixed solution 1, heating the mixed solution 1 to 80-200 °C under an inert atmosphere, and stirring the mixed solution 1 for 0.5-1.5 h for dissolving.

According to embodiments of the present disclosure, in the step (2), the halogen source may be selected from one, two, or three of hydrochloric acid, hydrobromic acid, and hydroiodic acid, and is preferably hydroiodic acid, hydrochloric acid, or hydrobromic acid.

According to embodiments of the present disclosure, in the step (2), the fluorine source is selected from one or more of hydrofluoric acid, fluosilicic acid, cesium fluoride, trifluoroacetate, fluorosilane and a derivative thereof, and a fluorine-containing trimethylsilane derivative, and is preferably hydrofluoric acid.

According to embodiments of the present disclosure, in the step (2), the halogen source and the fluorine source are in a volume ratio of (100-200):(10-70), preferably (110-180):(20-60), for example, (130-180):(30-50), for another example, (140-170):(35-45).

Illustratively, the hydrochloric acid and the hydrofluoric acid are in a volume ratio of (110-120):(30-50);
illustratively, the hydrobromic acid and the hydrofluoric acid are in a volume ratio of (140-150):(30-50);
illustratively, the hydriodic acid and the hydrofluoric acid are in a volume ratio of (170-180):(30-50).

According to an exemplary method of the present disclosure, the step (2) comprises the following step: mixing hydriodic acid and hydrofluoric acid to obtain a mixed solution 2.

According to an exemplary method of the present disclosure, the step (2) comprises a step of mixing hydrochloric acid and hydrofluoric acid to obtain a mixed solution 2. According to an exemplary method of the present disclosure, the step (2) comprises the following step: mixing hydrobromic acid and hydrofluoric acid to obtain a mixed solution 2.

According to embodiments of the present disclosure, in the step (3), when the mixed solution 2 is rapidly added into the mixed solution 1, the mixed solution 1 is at a temperature of 180-250 °C, for example, 190-220 °C, illustratively, 200 °C. According to embodiments of the present disclosure, in the step (3), since the mixed solution 2 has small volume, which thereof after being added into the mixed solution 1 will rapidly reaches the same temperature as that of the mixed solution 1. Therefore, the reaction is performed at a temperature same as that of the mixed solution 1. Further, the reaction is performed for 5-30 s, for example, 10-20 s.

According to embodiments of the present disclosure, in the step (3), the reaction is performed under conditions of an inert atmosphere and stirring.

According to embodiments of the present disclosure, in the step (3), the rapid cooling is rapid cooling of the reaction solution to room temperature in an ice-water bath. According to embodiments of the present disclosure, the step (3) further comprises performing a post-treatment on a reaction product after rapid cooling, preferably performing centrifugal separation and purification, to obtain the all-inorganic fluorinated perovskite quantum dot.

According to an exemplary embodiment of the present disclosure, the step (3) comprises the following steps: heating the mixed solution 1 to 180-250 °C, quickly adding the mixed solution 2, performing a reaction for 5-30 s under stirring, quickly cooling the reaction solution to room temperature in an ice-water bath, and performing centrifugal separation and purification to obtain the all-inorganic fluorinated perovskite quantum dot.

The present disclosure further provides the all-inorganic fluorinated perovskite quantum dot prepared by the above method.

The present disclosure further provides applications of the all-inorganic fluorinated perovskite quantum dot in photoelectric and photovoltaic devices and the like, such as solar cells, lasers, or light-emitting diodes.

### Beneficial Effects of the Present Disclosure:

The present disclosure provides a type of stable and efficient light-emitting all-inorganic fluorinated perovskite quantum dot, and a preparation method therefor and applications thereof. The all-inorganic fluorinated perovskite quantum dot is prepared by a hot-injection method, and the prepared all-inorganic fluorinated perovskite quantum dot has good dispersibility, uniformity, and repeatability. Since F ions are incorporated into the lattice of CsPbX₃ quantum dot by binding to Cs ions to form CsF•3/2HF (or CsF) compounds, which provide protection for the CsPbX₃ quantum dot by the fluorine ions, the all-inorganic fluorinated perovskite quantum dot is almost free of intrinsic defects on the surface and in the interior, so that the all-inorganic fluorinated perovskite quantum dot has enhanced PL emission and superior stability (that is, less susceptible to environmental factors such as humidity, light, and temperature) compared with a pure CsPbX₃ quantum dot. The all-inorganic fluorinated perovskite quantum dot has a PLQY of about 100% with PL lifetime showing single exponential decay, and can still emit dazzling light after one year. Therefore, the all-inorganic fluorinated perovskite quantum dot provided by the present disclosure can be used as a stable and efficient nano-luminescent material, and has potential application prospects in the fields of photoelectric and photovoltaic devices and the like.

### BRIEF DESCRIPTION OF THE DRAWINGS

FIG. 1 shows representative XRD patterns of the pure CsPbI₃ quantum dot of Comparative Example 1 and the fluorinated CsPbI₃ quantum dot of Example 1 according to the present disclosure. The instrument model is Rigaku MiniFlex2, and the copper radiation wavelength is A = 0.154187 nm.
FIG. 2 shows XRD patterns of the pure CsPbI₃ quantum dot of Comparative Example 1 and the fluorinated CsPbI₃ quantum dot with an increasing feeding proportion of a fluorine source according to the present disclosure. The instrument model is Rigaku MiniFlex2, and the copper radiation wavelength is *λ* = 0.154187 nm.

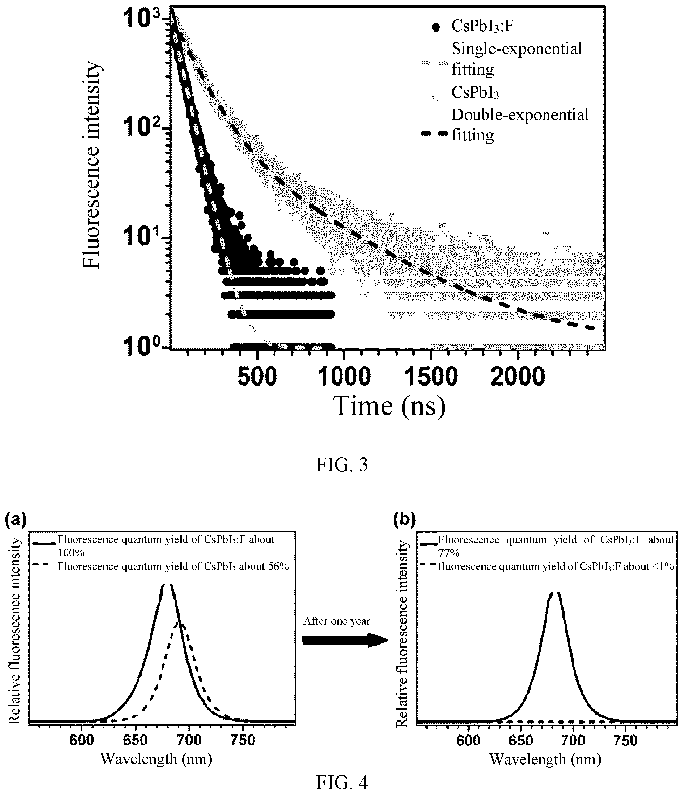

FIG. 3 shows a PL lifetime diagram of the pure CsPbI₃ quantum dot of Comparative Example 1 and the fluorinated CsPbI₃ quantum dot of Example 1 under the excitation by a 375-nm laser according to the present disclosure. The instrument model is Edinburgh FLS980, and the excitation light source is a 375-nm diode laser.
FIG. 4 shows PL emission spectra before and after one year of the pure CsPbI₃ quantum dot of Comparative Example 1 and the fluorinated CsPbI₃ quantum dot of Example 1 under the excitation by 365 nm ultraviolet light according to the present disclosure. The model of the instrument is Edinburgh FLS980, and the excitation light source is a xenon lamp.
FIG. 5 shows transmission electron microscope (TEM) morphological images before and after one year of the pure CsPbI₃ quantum dot of Comparative Example 1 and the fluorinated CsPbI₃ quantum dot of Example 1 according to the present disclosure. The instrument model is TECNAI G2 F20, and the manufacturer is FEI.
FIG. 6 shows a trend diagram of the normalized integral intensities of PL emission spectra of the pure CsPbI₃ quantum dot of Comparative Example 1 and the fluorinated CsPbI₃ quantum dot of Example 1, at every 5-minute interval in the following hour under the continuous excitation by a 375-nm laser according to the present disclosure. The instrument model is Edinburgh FLS980, and the excitation light source is a 375-nm diode laser.

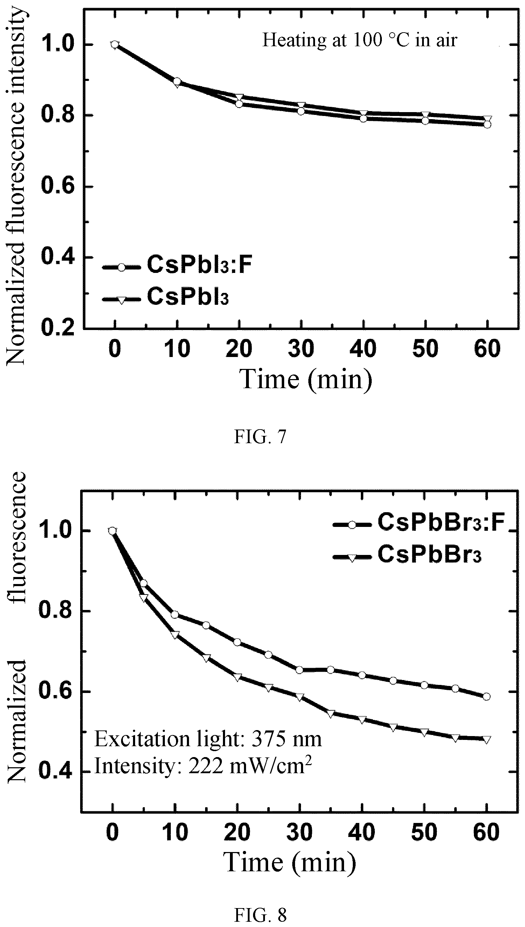

FIG. 7 shows a trend diagram of the normalized integral intensities of PL emission spectra of the pure CsPbI₃ quantum dot in Comparative Example 1 and the fluorinated CsPbI₃ quantum dot in Example 1 under the continuous heating at 100 °C in air, at every 10-minute interval in the following hour under the excitation by 365 nm ultraviolet light according to the present disclosure. The model of the instrument is Edinburgh FLS980, and the excitation light source is a xenon lamp. The heating and freezing stage model is Linkam THMS600E, and the temperature controller model is Linkam LNP95.
FIG. 8 shows a trend diagram of the normalized integral intensities of PL emission spectra of the pure CsPbBr₃ quantum dot of Comparative Example 2 and the fluorinated CsPbBr₃ quantum dot of Example 2, at every 5-minute interval in the following hour under the continuous excitation by a 375-nm laser according to the present disclosure. The instrument model is Edinburgh FLS980, and the excitation light source is a 375-nm diode laser.

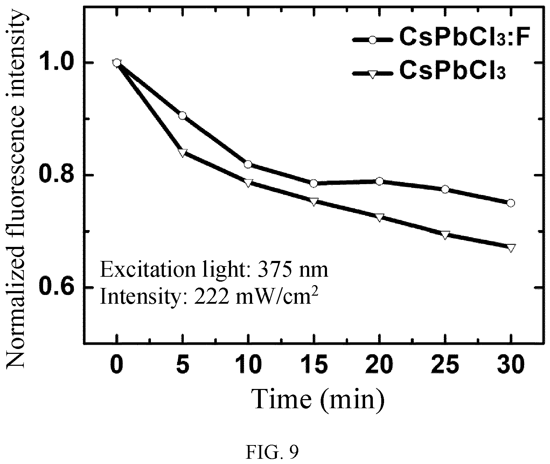

FIG. 9 shows a trend diagram of the normalized integral intensities of PL emission spectra of the pure CsPbCl₃ quantum dot of Comparative Example 3 and the fluorinated CsPbCl₃ quantum dot of Example 3, at every 5-minute interval in the following hour under the continuous excitation by a 375-nm laser according to the present disclosure. The instrument model is Edinburgh FLS980, and the excitation light source is a 375-nm diode laser.

### DETAILED DESCRIPTION

The technical solutions of the present disclosure will be further illustrated in detail with reference to the following specific examples. It will be understood that the following examples are merely exemplary illustrations and explanations of the present disclosure, and should not be construed as limiting the protection scope of the present disclosure. All implemented techniques based on the content of the present disclosure described above are included within the protection scope of the present disclosure.

Unless otherwise stated, the starting materials and reagents used in the following examples are all commercially available products or can be prepared using known methods.

### Example 1

### Preparation of all-inorganic fluorinated CsPbI₃ quantum dot

0.1 mmol cesium carbonate and 0.2 mmol lead acetate were taken and added into a two-neck round-bottom flask at room temperature, and 1 mL of oleic acid, 1 mL of oleylamine, 1 mL of trioctylphosphine, and 10 mL of octadecene were added as solvents. The mixture was heated to 120 °C under an inert atmosphere and stirred for 1 h for dissolving. The solution was heated to 200 °C, and a mixed solution of 175 µL of hydroiodic acid and 30 µL of hydrofluoric acid was injected rapidly. After a reaction was performed for 10 s, the reaction solution was rapidly cooled to room temperature in an ice-water bath, and centrifugally separated and purified to obtain the all-inorganic fluorinated CsPbI₃ quantum dot. The prepared all-inorganic fluorinated CsPbI₃ quantum dot has good dispersibility and homogeneous morphology, and has a size of about 12 nm (as shown in FIG. 5), with the XRD pattern shown in FIG. 1.

### Comparative Example 1

### Preparation of pure CsPbI₃ quantum dot

0.1 mmol cesium carbonate and 0.2 mmol lead acetate were taken and added into a two-neck round-bottom flask at room temperature, and 1 mL of oleic acid, 1 mL of oleylamine, 1 mL of trioctylphosphine, and 10 mL of octadecene were added as solvents. The mixture was heated to 120 °C under an inert atmosphere and stirred for 1 h for dissolving. The solution was heated to 200 °C, and 175 µL of hydroiodic acid was injected rapidly. After a reaction was performed for 10 s, the reaction solution was rapidly cooled to room temperature in an ice-water bath, and centrifugally separated and purified to obtain the pure CsPbI₃ quantum dot. The prepared all-inorganic pure CsPbI₃ quantum dot has good dispersibility and homogeneous morphology, and has a size of about 19 nm (as shown in FIG. 5), with the XRD pattern shown in FIG. 1.

As shown in FIG. 1, both the pure CsPbI₃ quantum dot and the fluorinated CsPbI₃ quantum dot belong to the cubic-phase CsPbI₃.

As shown in FIG. 2, as the feeding proportion of the fluorine source gradually increased (the feeding proportion of 0 mol%, 30 mol%, 40 mol%, and 60 mol%), the main diffraction peak with the diffraction angle between 27 degrees and 30 degrees shifted to the left along with the expanded lattice, and the product transformed from the pure CsPbI₃ phase (a = b = c =6.29 Å) to the pure CsF•3/2HF phase (a = b = c =8.93 Å), which was not a simple physical mixture of the two compounds. From this, it can be seen that in the all-inorganic fluorinated perovskite quantum dot of Example 1, F ions are incorporated into the lattice of CsPbX₃ quantum dot by binding to Cs ions to form CsF•3/2HF (or CsF) compounds.

As shown in FIG. 3, under the excitation by a 375-nm diode laser, the fluorinated CsPbI₃ quantum dot had PL lifetime showing single-exponential fitted decay, while the pure CsPbI₃ quantum dot had PL lifetime showing double-exponential fitted decay. The fluorinated CsPbI₃ quantum dot was almost free of intrinsic defects on the surface and in the interior, and had the PL decay lifetime of an intrinsic single radiation channel.

As shown in FIG. 4, under the excitation by 365 nm ultraviolet light from a xenon lamp, the as-synthesized fluorinated CsPbI₃ quantum dot had enhanced PL emission compared to the pure CsPbI₃ quantum dot. Moreover, the fluorinated CsPbI₃ quantum dot had a PLQY of about 100%, while the pure CsPbI₃ quantum dot only had a PLQY of about 56%. After the two samples were stored for one year away from the light, under the excitation by 365 nm ultraviolet light from a xenon lamp, the fluorinated CsPbI₃ quantum dot still emitted dazzling red light, with a PLQY of about 77%. The pure CsPbI₃ quantum dot had a PLQY of less than 1%, and had no PL emission. Compared with the pure CsPbI₃ quantum dot, the fluorinated CsPbI₃ quantum dot has excellent water- and oxygen-stability.

As shown in FIG. 5, under a TEM, the morphologies of the fluorinated CsPbI₃ quantum dots when being freshly prepared and after being stored for one year away from the light are both small squares with good dispersibility, uniform morphology, and a size of about 12 nm. The morphologies of the pure CsPbI₃ quantum dots when being freshly prepared are small square with good dispersibility, uniform morphology, and a size of about 19 nm, while the morphologies after being stored for one year away from the light are orthorhombic phases which are agglomerated together and do not emit light. Compared with the pure CsPbI₃ quantum dot, the fluorinated CsPbI₃ quantum dot has excellent water- and oxygen-stability.

As shown in FIG. 6, under the continuous excitation by a 375-nm diode laser (with an intensity of 222 mW/cm²), the PL emission spectra of the pure CsPbI₃ quantum dot and the fluorinated CsPbI₃ quantum dot were measured every 5 min over the next hour, and a trend of the normalized integrated intensities was observed. The PL intensity of the pure CsPbI₃ quantum dot decreased to around 30% of the initial intensity thereof after one hour of irradiation with a 375-nm diode laser, while the PL intensity of the fluorinated CsPbI₃ quantum dot could still maintain about 60% of the initial intensity thereof after one hour of irradiation with a 375-nm diode laser. The fluorinated CsPbI₃ quantum dot has significantly superior light-stability compared to the pure CsPbI₃ quantum dot.

As shown in FIG. 7, under the excitation by 365 nm ultraviolet light from a xenon lamp, the PL emission spectra of the pure CsPbI₃ quantum dot and the fluorinated CsPbI₃ quantum dot under the continuous heating at 100 °C in air were measured every 10 min over the next hour, and a trend of the normalized integrated intensity was observed. The PL intensities of the pure CsPbI₃ quantum dot and the fluorinated CsPbI₃ quantum dot could maintain about 80% of the initial intensities thereof after being heated for one hour, thereby having excellent thermal-stability and can tolerate the thermal annealing process in the manufacture of photoelectric and photovoltaic devices.

### Example 2

### Preparation of all-inorganic fluorinated CsPbBr₃ quantum dot

0.1 mmol cesium carbonate and 0.2 mmol lead acetate were taken and added into a two-neck round-bottom flask at room temperature, and 1 mL of oleic acid, 1 mL of oleylamine, 1 mL of trioctylphosphine, and 10 mL of octadecene were added as solvents. The mixture was heated to 120 °C under an inert atmosphere and stirred for 1 h for dissolving. The solution was heated to 200 °C, and a mixed solution of 150 µL of hydrobromic acid and 30 µL of hydrofluoric acid was injected rapidly. After a reaction was performed for 10 s, the reaction solution was rapidly cooled to room temperature in an ice-water bath, and centrifugally separated and purified to obtain the all-inorganic fluorinated CsPbBr₃ quantum dot.

### Comparative Example 2

### Preparation of pure CsPbBr₃ quantum dot

0.1 mmol cesium carbonate and 0.2 mmol lead acetate were taken and added into a two-neck round-bottom flask at room temperature, and 1 mL of oleic acid, 1 mL of oleylamine, 1 mL of trioctylphosphine, and 10 mL of octadecene were added as solvents. The mixture was heated to 120 °C under an inert atmosphere and stirred for 1 h for dissolving. The solution was heated to 200 °C, and 150 µL of hydrobromic acid was injected rapidly. After a reaction was performed for 10 s, the reaction solution was rapidly cooled to room temperature in an ice-water bath, and centrifugally separated and purified to obtain the pure CsPbBr₃ quantum dot.

As shown in FIG. 8, under the continuous excitation by a 375-nm diode laser (with an intensity of 222 mW/cm²), the PL emission spectra of the pure CsPbBr₃ quantum dot and the fluorinated CsPbBr₃ quantum dot were measured every 5 min over the next hour, and a trend of the normalized integrated intensities was observed. The fluorinated CsPbBr₃ quantum dot has superior light-stability compared to the pure CsPbBr₃ quantum dot.

### Example 3

### Preparation of all-inorganic fluorinated CsPbCl₃ quantum dot

0.1 mmol cesium carbonate and 0.2 mmol lead acetate were taken and added into a two-neck round-bottom flask at room temperature, and 1 mL of oleic acid, 1 mL of oleylamine, 1 mL of trioctylphosphine, and 10 mL of octadecene were added as solvents. The mixture was heated to 120 °C under an inert atmosphere and stirred for 1 h for dissolving. The solution was heated to 200 °C, and a mixed solution of 115 µL of hydrochloric acid and 30 µL of hydrofluoric acid was injected rapidly. After a reaction was performed for 10 s, the reaction solution was rapidly cooled to room temperature in an ice-water bath, and centrifugally separated and purified to obtain the all-inorganic fluorinated CsPbCl₃ quantum dot.

### Comparative Example 3

### Preparation of pure CsPbCl₃ quantum dot

0.1 mmol cesium carbonate and 0.2 mmol lead acetate were taken and added into a two-neck round-bottom flask at room temperature, and 1 mL of oleic acid, 1 mL of oleylamine, 1 mL of trioctylphosphine, and 10 mL of octadecene were added as solvents. The mixture was heated to 120 °C under an inert atmosphere and stirred for 1 h for dissolving. The solution was heated to 200 °C, and 115 µL of hydrochloric acid was injected rapidly. After a reaction was performed for 10 s, the reaction solution was rapidly cooled to room temperature in an ice-water bath, and centrifugally separated and purified to obtain the pure CsPbCl₃ quantum dot.

As shown in FIG. 9, under the continuous excitation by a 375-nm diode laser (with an intensity of 222 mW/cm²), the PL emission spectra of the pure CsPbCl₃ quantum dot and the fluorinated CsPbCl₃ quantum dot were measured every 5 min over the next hour, and a trend of the normalized integrated intensities was observed. The fluorinated CsPbCl₃ quantum dot has superior light-stability compared to the pure CsPbCl₃ quantum dot.

The examples of the present disclosure have been described above. However, the present disclosure is not limited to the examples described above. Any modification, equivalent, improvement and the like made without departing from the spirit and principle of the present disclosure shall fall within the protection scope of the present disclosure.

## Claims

1. A type of all-inorganic fluorinated perovskite quantum dot, wherein the perovskite quantum dot is a CsPbX₃ quantum dot, wherein X is a halogen element and is selected from one, two, or three of Cl, Br, and I; the all-inorganic fluorinated perovskite quantum dot is doped with a fluorine element and is abbreviated as CsPbX₃:F.

2. The all-inorganic fluorinated perovskite quantum dot according to claim 1, wherein the halogen element and the fluorine element are in ionic states in the all-inorganic fluorinated perovskite quantum dot;
preferably, the all-inorganic fluorinated perovskite quantum dot is CsPbCl₃:F, CsPbBr₃:F, CsPbI₃:F, CsPbClₙBr₃₋ₙ(0<n<3):F, or CsPbBrₙI₃₋ₙ(0<n<3):F;
preferably, the all-inorganic fluorinated perovskite quantum dot is of a cubic phase, tetragonal phase, or orthorhombic phase structure, preferably of a cubic phase or tetragonal phase structure, more preferably of a cubic phase structure;
preferably, the all-inorganic fluorinated perovskite quantum dot has a particle size of 1-100 nm.

3. The all-inorganic fluorinated perovskite quantum dot according to claim 1 or 2, wherein in the all-inorganic fluoride perovskite quantum dot, the elements X and F are in a molar ratio of (0-1):(0-1), not including 0, preferably (0.9-1):(0.2-0.6); preferably, in the all-inorganic fluorinated perovskite quantum dot, F ions are incorporated into the lattice of CsPbX₃ quantum dot by binding to Cs ions to form CsF•3/2HF (or CsF) compounds;
preferably, the all-inorganic fluorinated perovskite quantum dot is almost free of intrinsic defects on the surface and in the interior;
preferably, the all-inorganic fluorinated perovskite quantum dot CsPbI₃:F has an XRD pattern substantially as shown in FIG. 1;
preferably, the all-inorganic fluorinated perovskite quantum dot CsPbI₃:F has a morphology substantially as shown in FIG. 5;
preferably, the all-inorganic fluorinated perovskite quantum dot can have a fluorescence quantum yield up to about 100%;
preferably, after being stored for one year away from the light, the all-inorganic fluorinated perovskite quantum dot has a fluorescence quantum yield over 70%; preferably, the all-inorganic fluorinated perovskite quantum dot is tolerant to a temperature of 80-120 °C in air.

4. A preparation method for the all-inorganic fluorinated perovskite quantum dot according to any one of claims 1 to 3, wherein the preparation method comprises the following step: obtaining the all-inorganic fluorinated perovskite quantum dot by a hot-injection method using a cesium source, a lead source, a long-alkyl-chain organic acid, a long-alkyl-chain organic amine, trioctylphosphine, octadecene, a halogen source, and a fluorine source as starting materials.

5. The preparation method for the all-inorganic fluorinated perovskite quantum dot according to claim 4, wherein the preparation method for the all-inorganic fluoride perovskite quantum dot comprises the following steps:
(1) mixing a cesium source, a lead source, a long-alkyl-chain organic acid, a long-alkyl-chain organic amine, trioctylphosphine, and octadecene to obtain a mixed solution 1;
(2) mixing a halogen source and a fluorine source to obtain a mixed solution 2; and
(3) rapidly adding the mixed solution 2 into the mixed solution 1 to react, and rapidly cooling the mixture after the reaction is completed to obtain the all-inorganic fluorinated perovskite quantum dot.

6. The preparation method for the all-inorganic fluorinated perovskite quantum dot according to claim 4 or 5, wherein the cesium source, the lead source, and the long-alkyl-chain organic acid are in a molar-to-volume ratio of (0.08-0.12) mmol:(0.18-0.22) mmol:(0.5-1.5) mL;
preferably, the long-alkyl-chain organic acid, the long-alkyl-chain organic amine, the trioctylphosphine, and the octadecene are in a volume ratio of (0.5-1.5):(0.5-1.5):(0.5-1.5):(5-15);
preferably, the cesium source is selected from one, two, or more of cesium carbonate, cesium acetate, and cesium oleate;
preferably, the lead source is selected from one, two, or more of lead stearate, lead oleate, lead oxide, lead acetate, and lead nitrate;
preferably, the long-alkyl-chain organic acid is selected from one, two, or more of octanoic acid, dodecanoic acid, and oleic acid;
preferably, the long-alkyl-chain organic amine is selected from one, two, or more of butylamine, n-octylamine, dodecylamine, octadecylamine, and oleylamine.

7. The preparation method for the all-inorganic fluorinated perovskite quantum dot according to claim 5 or 6, wherein in the step (1), the mixing is performed under conditions of an inert atmosphere and stirring;
preferably, in the step (1), the mixing is performed at a temperature of 80-200 °C;
preferably, in the step (1), the mixing is performed for 0.5-1.5 h.

8. The preparation method for the all-inorganic fluorinated perovskite quantum dot according to any one of claims 5 to 7, wherein in the step (2), the halogen source is selected from one, two, or three of hydrochloric acid, hydrobromic acid, and hydroiodic acid;
preferably, in the step (2), the fluorine source is selected from one or more of hydrofluoric acid, fluosilicic acid, cesium fluoride, trifluoroacetate, fluorosilane and a derivative thereof, and a fluorine-containing trimethylsilane derivative;
preferably, in the step (2), the halogen source and the fluorine source are in a volume ratio of (100-200):(10-70).

9. The preparation method for the all-inorganic fluorinated perovskite quantum dot according to any one of claims 5 to 8, wherein in the step (3), when the mixed solution 2 is rapidly added into the mixed solution 1, the mixed solution 1 is at a temperature of 180-250 °C;
preferably, the reaction is performed at a temperature same as the temperature of the mixed solution 1;
preferably, the reaction is performed for 5-30 s;
preferably, the reaction is performed under conditions of an inert atmosphere and stirring;
preferably, the rapid cooling is rapid cooling of the reaction solution to room temperature in an ice-water bath;
preferably, the step (3) further comprises performing a post-treatment on a reaction product after rapid cooling, preferably performing centrifugal separation and purification, to obtain the all-inorganic fluorinated perovskite quantum dot.

10. Applications of the all-inorganic fluorinated perovskite quantum dot according to any one of claims 1 to 3 in photoelectric and photovoltaic devices.
